# EUROPÄISCHE PATENTSCHRIFT

(11) **EP 0 703 657 B1**
(45) Veröffentlichungstag und Bekanntmachung des Hinweises auf die Patenterteilung: **03.03.1999**
(21) Anmeldenummer: 95110023.9
(22) Anmeldetag: 27.06.1995
(51) Int. Cl.: H02K 9/19, F01P 3/20

(54) **Brennkraftmaschine mit Kühlkreislauf und flüssigkeitsgekühltem Generator**
Internal combustion engine with cooling circuit and liquid cooled generator
Moteur à combustion interne à circuit de refroidissement et générateur refroidi par liquide

(30) Priorität: 26.08.1994 DE 4430429
(43) Veröffentlichungstag der Anmeldung: 27.03.1996
(73) Patentinhaber: Bayerische Motoren Werke Aktiengesellschaft, 80788 München (DE)
(72) Erfinder: Dembinski, Norbert, D-81739 München (DE)

(56) Entgegenhaltungen:
- DE-A- 3 044 422
- DE-C- 3 207 605
- US-A- 4 765 283

## Beschreibung

Die Erfindung bezieht sich nach dem Oberbegriff des Patentanspruches 1 auf eine Brennkraftmaschine mit einem thermostatgeregelten Kühlkreislauf, der mit einer Wärmetauscheinrichtung eines flüssigkeitsgekühlten Generators in kühlmittelführender Verbindung steht.

Aus der DE-A 32 07 605 ist ein mit dem Kühlkreislauf einer Brennkraftmaschine kühlmittel führend verbundener Generator bekannt, der neben einem Bordnetz-Generator einen Heiz-Generator umfaßt. Insbesondere die im Heiz-Generator erzeugte Wärme dient der zusätzlichen Erwärmung des Kühlmittels bei kaltbetriebener Brennkraftmaschine.

Bei Komfort-Fahrzeugen mit hubraumstarken Brennkraftmaschinen kann sich im Niedriglastbetrieb insbesondere bei niedrigen Außentemperaturen ein erheblicher Bedarf an elektrischer Leistung im Bordnetz ergeben. Hierfür geeignete, flüssigkeitsgekühlte Generatoren weisen einen der elektrischen Leistung entsprechend hohen Wärmeanfall auf.

Der Erfindung liegt die Aufgabe zugrunde, für einen leistungsstarken, flüssigkeitsgekühlten Generator eine derartige Anordnung aufzuzeigen, daß die Wärmeabfuhr des Generators in Abhängigkeit der Betriebstemperatur der Brennkraftmaschine einfach zu steuern ist.

Diese Aufgabe ist mit dem Patentanspruch 1 gelöst. Diese Anordnung der Wärmetauscheinrichtung des Generators ergibt, daß bei einem Kühlmittelumlauf über den Kurzschluß der Brennkraftmaschine eine zusätzliche Erwärmung des Kühlmittels durch den Generator erreicht ist, und daß bei einem Kühlmittelumlauf über den externen Kühler der Brennkraftmaschine eine Kühlung des Generators bewirkt ist.

Mit der Erfindung ist somit bei Kaltbetrieb der Brennkraftmaschine eine zusätzliche Wärmezufuhr zum Kühlmittel ohne gesonderte Belastung des Bordnetzes erreicht, und bei betriebswarmer Brennkraftmaschine ist eine Wärmeabfuhr aus dem Generator ohne Belastung der Brennkraftmaschine direkt in den externen Kühler der Brennkraftmaschine erzielt.

Eine bevorzugte Anwendung der Erfindung in Verbindung mit einer vorteilhaft gestalteten Kühlmittel führung für die Wärmetauscheinrichtung eines Generators ist in den Unteransprüchen angegeben.

Die Erfindung ist anhand eines in der Zeichnung schematisch dargestellten Ausführungbeispiels beschrieben. Es zeigt
- Figur 1: einen flüssigkeitsgekühlten Generator an einer kaltbetriebenen Brennkraftmaschine mit über den Kurzschluß umlaufendem Kühlmittel, und
- Figur 2: die Kühlmittel führung durch den flüssigkeitsgekühlten Generator bei betriebswarmer Brennkraftmaschine mit über den externen Kühler umlaufendem Kühlmittel.

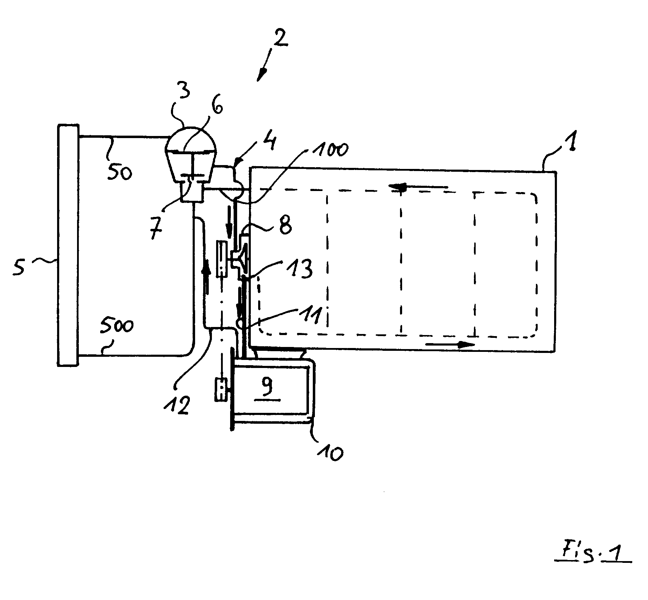

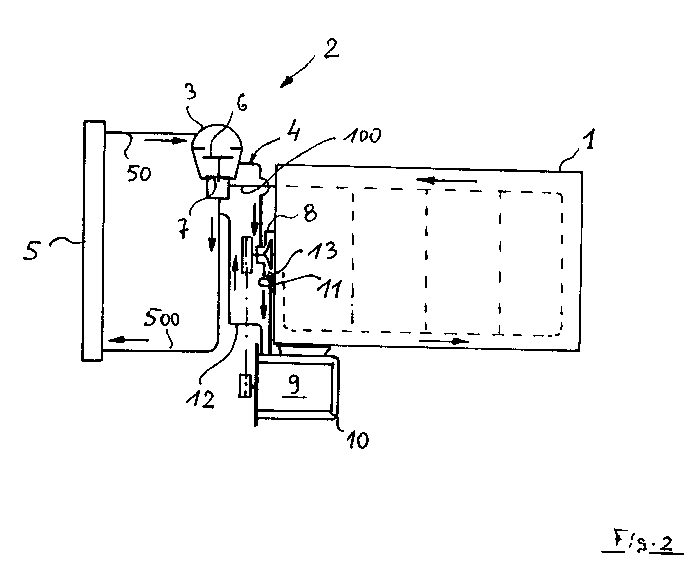

Eine flüssigkeitsgekühlte Brennkraftmaschine 1 mit einem Kühlkreislauf 2 umfaßt einen Thermostaten 3, der das Kühlmittel zwischen einem Maschinenumlauf über einen Kurzschluß 4 gemäß Figur 1 und einem Maschinenumlauf über einen externen Kühler 5 nach Figur 2 steuert. Der entsprechend einer Kühlerrücklaufregelung angeordnete Thermostat 3 umfaßt ein Hauptventil 6 zum öffnen und Schließen eines Kühler-Rücklaufes 50 sowie ein Kurzschlußventil 7, das abhängig von der Regeltemperatur des Hauptventiles 6 einen Maschinen-Rücklauf 100 zwischen dem eine Wasserpumpe 8 umfassenden Kurzschluß 4 der Brennkraftmaschine 1 und einem Kühler-Vorlauf 500 steuert.

Die Brennkraftmaschine 1 ist weiter mit einem flüssigkeitsgekühlten, leistungsstarken Generator 9 ausgerüstet, dessen Wärmetauscheinrichtung 10 über eine Leitung 11 stromab der Wasserpumpe 8 Kühlmittel aus dem Kühlkreislauf 2 der Brennkraftmaschine 1 zugeführt ist. Diese Wärmetauscheinrichtung 10 des Generators 9 steht zum Ablauf des Kühlmittels mit dem Kühler-Vorlauf 500 vorzugsweise kurzschlußseitig über eine Leitung 12 in Verbindung.

Diese erfindungsgemäße Anordnung der Wärmetauscheinrichtung 10 des Generators 9 hat den Vorteil, daß bei einem durch einen Kaltbetrieb der Brennkraftmaschine 1 mittels des Thermostaten 3 bewirkten Kühlmittelumlauf über den Kurzschluß 4 der Brennkraftmaschine 1 eine zusätzliche Erwärmung des Kühlmittels durch den Wärmeanfall des Generators 9 erreicht ist. Ein besonders hoher Wärmeanfall resultiert z.B. aus einem erheblichen Bedarf an elektrischer Leistung im Bordnetz eines Komfort-Fahrzeuges mit hubraumstarker Brennkraftmaschine 1, die bei niedrigen Außentemperaturen lediglich in Niedriglast betrieben wird.

Weiter bietet die erfindungsgemäße Anordnung den Vorteil, daß bei einem durch eine betriebswarme Brennkraftmaschine 1 mittels des Thermostaten 3 bewirkten Kühlmittelumlauf über den externen Kühler 5 der Brennkraftmaschine 1 eine Kühlung des Generators 9 ohne Wärmebelastung der Brennkraftmaschine 1 durch direkte Wärmeabfuhr in den Kühler 5 erzielt ist.

Um in jedem der beiden vorgenannten Fälle eine wirkungsvolle Wärmeabfuhr aus dem Generator 9 zu erreichen, ist bei einer als Kreiselpumpe gestalteten Wasserpumpe 8 das Kühlmittel aus der Laufradkammer 13 für die Wärmetauscheinrichtung 10 des Generators 9 abgezweigt. Damit wird das Kühlmittel vorteilhafter mit relativ hohem Druck der Wärmetauscheinrichtung 10 zugeführt, die im übrigen zwischen der Zu-Leitung 11 und der Ab-Leitung 12 einen nicht gezeigten, relativ langen Strömungsweg für das Kühlmittel aufweist.

Die Druckbeaufschlagung des Kühlmittels in der Wärmetauscheinrichtung 10 ist weiter vorteilhaft für die Ab-leitung des Kühlmittels über die Leitung 12 in den kurzkurzschluß- bzw. thermostatseitigen Bereich des Kühler-Vorlaufes 500, da hierdurch bei einem Maschinenumlauf über den Kurzschluß 4 gemäß Figur 1 das Generator-Kühlmittel über das offene Kurzschlußventil 7 des Thermostaten 3 dem Maschinenumlauf zugeführt ist.

Die Erfindung kann auch bei einer Brennkraftmaschine mit einer Maschinenaustrittsregelung der Kühlmitteltemperatur Verwendung finden.

## Patentansprüche

1. Brennkraftmaschine mit Kühlkreislauf und flüssigkeitsgekühltem Generator,
- dessen Wärmetauscheinrichtung (10) mit dem eine Wasserpumpe (8) umfassenden Kühlkreislauf (2) in Verbindung steht, wobei
- ein Thermostat (3) das Kühlmittel zwischen einem Maschinenumlauf über einen Kurzschluß (4) der Brennkraftmaschine (1) und einem Maschinenumlauf über einen externen Kühler (5) der Brennkraftmaschine (1) steuert,
- gekennzeichnet durch eine Anordnung der Wärmetauscheinrichtung (10) des Generators (9) derart,
- daß bei jedem Kühlmittelumlauf das Kühlmittel der Wärmetauscheinrichtung (10) aus einer Laufradkammer (13) der als eine Kreiselpumpe gestalteten Wasserpumpe (8) zugeführt ist, und
- daß die Wärmetauscheinrichtung (10) zum Ablauf des Kühlmittels mit einem über den Thermostaten (3) gesteuerten Kühler-Vorlauf (500) in Verbindung steht.

2. Brennkraftmaschine nach Anspruch 1, dadurch gekennzeichnet,
- daß ein entsprechend einer Kühlerrücklaufregelung angeordneter Thermostat (3) vorgesehen ist, dessen
- Kurzschlußventil (7) temperaturabhängig einen Maschinen-Rücklauf (100) zwischen dem die Wasserpumpe (8) umfassenden Kurzschluß (4) und einem Kühler-Vorlauf (500) steuert, wobei
- die Wärmetauscheinrichtung (10) zum Ablauf des Kühlmittels mit dem thermostatgesteuerten Kühler-Vorlauf (500) kurzschlußseitig in Verbindung steht.

3. Brennkraftmaschine nach Anspruch 1, gekennzeichnet durch die Verwendung der Anordnung der Generator-Wärmetauscheinrichtung (10) in einem Kühlkreislauf (2) mit Maschinenaustrittsregelung der Kühlmitteltemperatur.

## Claims

1. An internal combustion engine with a cooling circuit and a liquid cooled generator,
- whose heat exchanger device (10) is in connection with a cooling circuit (2), including a water pump (8), whereby
- a thermostat (3) controls the cooling medium between a machine circulation via a by-pass (4) of the internal combustion engine (1) and a circulation via an external radiator (5) of the internal combustion engine,
- characterised by an arrangement of the heat exchanger device (10) of the generator (9) such that,
- in each cooling medium circulation the cooling medium is taken to the heat exchanger device (10) from an impeller chamber (13) of a water pump (8), configured as a centrifugal pump, and
- that the heat exchanger device (10) is in connection with a radiator input pipe (500) controlled by the thermostat (3) for the discharge of the cooling medium.

2. An internal combustion engine according to Claim 1, characterised in that,
- a thermostat (3) is provided, suitably arranged for the control of the radiator return flow, whose
- by-pass valve (7) controls a machine return flow (100) between the by-pass (4), including the water pump (8) and a radiator input pipe (500) depending on the temperature, whereby
- the heat exchanger device (10) is in connection with the thermostat controlled radiator input pipe (500) on the by-pass side, for the discharge of cooling medium.

3. An internal combustion engine according to Claim 1, characterised by the application of the arrangement of the generator heat exchanger device (10) in a cooling circuit (2) with machine output control of the cooling medium temperature.

## Revendications

1. Moteur à combustion interne équipé d'un circuit de refroidissement et d'un générateur refroidi par du liquide, dont l'échangeur de chaleur (10) est relié à un circuit de refroidissement (2) équipé d'une pompe à eau (8),
- un thermostat (3) commandant le passage du liquide de refroidissement entre le circuit de moteur par un court-circuit (4) du moteur (1), et un circuit de moteur par un radiateur externe (5) du moteur à combustion interne (1),
caractérisé par
une disposition de l'échangeur de chaleur (10) du générateur (9) pour que
- chaque circuit de liquide de refroidissement de l'échangeur de chaleur (10) soit prélevé d'une chambre à rotor (13) pour être fourni à une pompe à eau (8) en forme de pompe centrifuge, et
- l'échangeur de chaleur (10) est relié à une conduite d'alimentation (500) vers le radiateur, conduite commandée par le thermostat (3) pour la sortie du liquide de refroidissement.

2. Moteur à combustion interne selon la revendication 1, caractérisé en ce qu'
- il comporte un thermostat (3) correspondant à une régulation de retour du radiateur,
dont la vanne de court-circuit (7) commande, en fonction de la température, un retour de moteur (100) qui commande le court-circuit (4) avec la pompe à eau (8) et une conduite d'alimentation (500) du radiateur, et
- l'échangeur de chaleur (10) est relié, du côté du court-circuit, à la conduite d'alimentation (500) du radiateur, à commande thermostatique, pour évacuer le liquide de refroidissement.

3. Moteur à combustion interne selon la revendication 1, caractérisé par
l'application du dispositif d'échangeur de chaleur (10)/générateur à un circuit de refroidissement (2) équipé d'une régulation de sortie de machine pour la température du liquide de refroidissement.
